# EUROPEAN PATENT SPECIFICATION

(11) **EP 3 842 172 B1**
(45) Date of publication and mention of the grant of the patent: **03.05.2023**
(21) Application number: 20210215.8
(22) Date of filing: 27.11.2020
(51) Int. Cl.: B23D 45/02, B23D 45/10, B28D 1/04, B27B 5/075

(54) **WOODEN PIECES WORKING CENTRE COMPRISING A DOUBLE BLADE GROUP**
EINE DOPPELTE SCHNEIDENGRUPPE UMFASSENDER BEARBEITUNGSCENTER FÜR HOLZTEILE
CENTRE D'USINAGE POUR PIÈCES EN BOIS COMPRENANT UN GROUPE DOUBLE LAMES

(30) Priority: 24.12.2019 IT 201900025534
(43) Date of publication of application: 30.06.2021
(73) Proprietor: SCM Group S.p.A., 47921 Rimini (RN) (IT)
(72) Inventor: SPAZZOLI, Andrea, 47921 RIMINI (IT)
(74) Representative: Tiburzi, Andrea

(56) References cited:
- EP-A1- 2 253 422
- EP-A1- 2 554 342
- WO-A1-2017/002035
- WO-A1-2018/235008

## Description

The present invention relates to a working center for pieces made of wood, ceramic, plastic, metal, glass, fiberglass, and the like, comprising a double blade working group.

More in detail, the invention relates to a working center of the above kind, designed and realized in particular for machining wooden panels, in particular for cutting or sectioning by means of a working group comprising two blades, but which can be used for any machining, for which it is necessary to cut or to section a panel.

In the following, the description will be addressed to a working center for cutting wooden panels, but it is clear that it should not be considered limited to this specific use.

As is well known, currently, to cut wooden pieces, in particular panels or packs of panels, the working machines, known as panel cutters, used for cutting panels or packs of panels, are used.

Known cutting machines comprise a panel support plane, pressing means for fixing the panel to the support plane, and a carriage, arranged below the support plane and movable along with this, comprising a tool provided with two blades. Usually, these two blades have the same size, are movable along a vertical axis, approaching and moving away from the surface of the panel, are arranged one after the other, and rotate according to opposite rotation directions.

In the forward travel of the carriage along the support surface, the first blade is arranged at a certain height along the vertical axis, rotates in a rotation direction, and traces an incision line on the panel.

At the same time, the second blade, arranged after the first considering the advancement direction of the carriage, rotates according to a rotation direction opposite to the rotation direction of the first blade, and it is arranged along the vertical axis at a higher level than the height of the first blade, i.e., it is raised with respect to the first blade, therefore it can perform the cutting of the panel along the incision line made by the first blade.

When the carriage moves along the opposite direction, the roles of the two blades swap.

The disadvantage of these known cutting machines is that they can only cut the panels and cannot be used for other processes.

Working centers are also known, which are provided with a working plane for supporting a panel and a cross member, movable along said working plane, provided with a blade-type cutting tool.

The blade is used as an incision blade when the cross member translates in a forward direction and it is used as a cutting blade when the cross member translates in the direction opposite to the forward direction.

The relevant prior art includes also the patent applications WO 2018/235008 A1, WO 2017/002035 A1, EP 2 554 342 A1 and EP 2 253 422 A1. WO2018/235008A1 discloses a combined cutting and bevelling machine for working workpieces, comprising a working plane for supporting said workpieces to be worked, that extends along a first axis; a movable cross member moving along said working plane, according to said first axis; a working group coupled to said movable cross member, and movable along a third axis, orthogonal to said first axis and second axis, so as to carry out cuts on said workpieces, during cutting strokes according to cutting lines, and that said working group comprises a first rotary disc blade and a second rotary disc blade, substantially arranged coplanar and configured so that, during the same cutting stroke of said working group along a cutting line, said first blade is capable of carrying out an incision, partially interfering with said workpiece, and said second blade is capable of carrying out a pass-through cut in said workpiece, along said incision, and that said working group, comprises a support slidably coupled to said movable cross member.

The disadvantage of these known working centers is that the cutting times of a panel are very long, since, in order to perform a cut, it is necessary to use a cross member forward time and a cross member return time.

In the light of the above, it is therefore an object of the present invention to provide a working center comprising a double-blade working group, which allows the panel to be cut quickly.

It is a further object of the present invention to provide a working center comprising a working group that can be changed in order to carry out different processes.

The invention is set out in the appended set of claims.

Preferably according to the invention, said first blade may be capable of carrying out said incision on said workpiece when said working group moves along a first direction of said cutting line, and said second blade is capable of carrying out a pass-through cut along said incision of said workpiece when said working group moves according to said first direction of said cutting line.

Further according to the invention, said second blade is capable of carrying out said incision on said workpiece when said working group moves according a second direction of said cutting line, opposite to said first direction, and said first blade is capable of carrying out a pass-through cut in said workpiece when said working group moves according to said second direction of said cutting line, opposite to said first direction.

Still according to the invention, said first and second blade are capable of rotating according to rotation directions opposite with each other.

Always according to the invention, said first and second blade are relatively mobile to each other along said third axis, approaching and moving away from the surface of said workpiece.

Preferably according to the invention, said first and second blade have the same diameter.

Further according to the invention, said first and second blade have a different diameter.

Said working group comprises a support slidably coupled to said movable cross member along said second axis, and an aggregate, which in turn comprises said first and second blade.

Always according to the invention, said working group further comprises a head rotatably coupled to said support around a first rotation axis, said working group comprises an electrospindle coupled to said head, and said aggregate and said electrospindle comprise coupling interface means.

Preferably according to the invention, said electrospindle is coupled, in a removable way, to said head and rotatably around a second rotation axis.

Further according to the invention, said working group comprises a support slidably coupled to said movable cross member along said second axis, and an aggregate, which in turn comprises said first and second blade, and said support or said aggregate comprises motor means for the rotating actuation of said first and second blade.

Still according to the invention, said aggregate is rotatably coupled to said support around a first rotation axis.

Always according to the invention, said aggregate is coupled to said support in a removable way.

The present invention will be now described, for illustrative but not limitative purposes, according to its preferred embodiments, with particular reference to the figures of the enclosed drawings, wherein:
figure 1 shows a perspective view of the working center for wooden pieces comprising a double blade unit, object of the present invention;
figure 2 shows a perspective view of a detail of the working center shown in figure 1;
figure 3 shows a front view of the detail shown in figure 2;
figure 4 shows a front view of the detail being machined shown in figure 3; and
figure 5 shows a perspective view of a second embodiment of the detail of the working center shown in figure 1.

In the various figures, similar parts will be indicated by the same reference numbers.

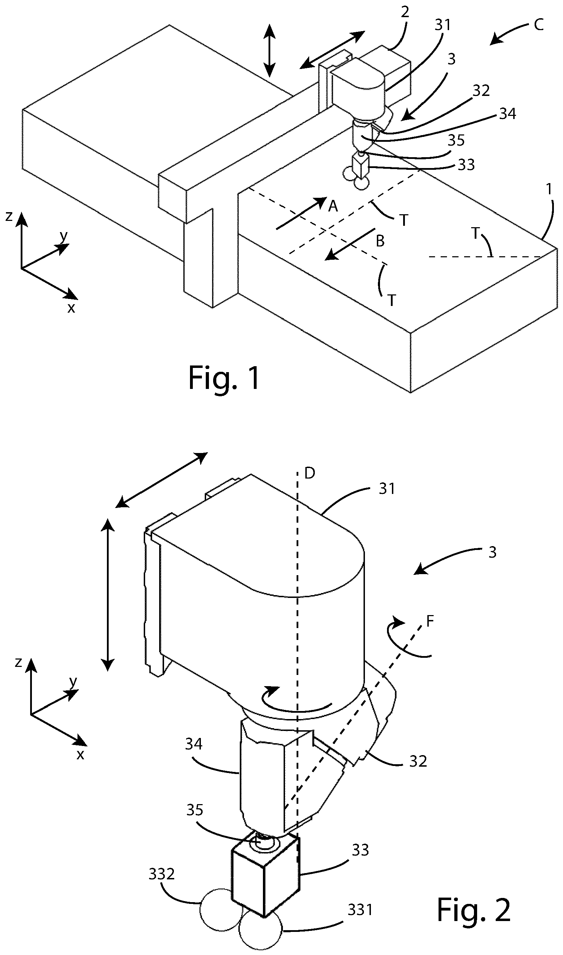

With reference to figures 1-4, the working center C for pieces made of wood, ceramic, plastic, metal, glass, fiberglass, and the like, comprising a double-blade working group 3, object of the present invention, essentially comprises a working plane 1, for supporting the pieces to be machined, a movable crosspiece 2, which translates along said working plane 1, and which supports a working group 3 for machining the pieces.

Said working plane 1 has an elongated shape, the main dimension of which extends mainly along a first X-axis of the Cartesian reference system XYZ.

Said working plane 1 can comprise either a plurality of support bars, for passing machining, or a multifunction table, for passing machining.

For clarity of description, multifunctional working planes 1 means a continuous plane used for non-passing machining in the vertical direction, i.e., perpendicular to the plane 1 itself, provided with fixing means for the piece to be machined, generally, a vacuum system defined in specific zones of the working plane by means of seals manually placed by an operator.

Said movable cross member 2 translates along said working plane according to the X-axis, for moving said working group 3 from one end to the other of said working plane 1.

Furthermore, said working group 3 is movable along a second Y-axis and along a third Z-axis, so as to perform cuts on a piece P, during the cutting strokes according to the cutting lines T.

By cutting stroke is meant a movement of said working group 3 along an X, Y, Z axes, along cutting lines, which can be parallel to the X, Y, Z or oblique axes.

In a first embodiment, said working group 3 comprises a support 31, a head 32, an aggregate 33, and an electrospindle 34.

Said support 31 is capable of translating along said movable crosspiece 2, according to the Y-axis of the Cartesian reference system XYZ.

Furthermore, said support 31 is also capable of translating vertically with respect to said working plane 1, i.e., according to the Z-axis of the Cartesian reference system XYZ.

Said head 32 is coupled to said support 31 and it is capable of rotating around a first rotation axis D with respect to said head 32, thus realizing both a 3-axes and a 5-axes working group.

Said electrospindle 34 is coupled to said head 32 in a removable way and is able to rotate around a second rotation axis F.

Said electrospindle 34 can also not rotate with respect to said second rotation axis F.

Said aggregate 33 is coupled to said electrospindle 34 by means of coupling interface means 35 and comprises a first blade 331 and a second blade 332.

Said first 331 and second 332 blades are arranged aligned and coplanar with each other, so that, when said working group 3 translates along the positive Y-axis, in the direction indicated by A, said first blade 331 precedes said second blade 332, vice versa, when said working group 3 translates along the negative Y-axis, in the direction indicated with B, said first blade 331 follows said second blade 332.

Furthermore, said working group 3 can also follow cutting lines parallel to the X-axis or even oblique since said head 32 is rotatably movable.

Said first 331 and second 332 blades rotate in opposite rotation directions.

Said first 331 and second 332 blades are independently movable along the Z-axis, approaching and moving away from the surface of the piece P.

Finally, said first 331 and second 332 blades have the same size, in particular the same diameter, being circular.

Said first 331 and second 332 blades can also have different diameters from each other.

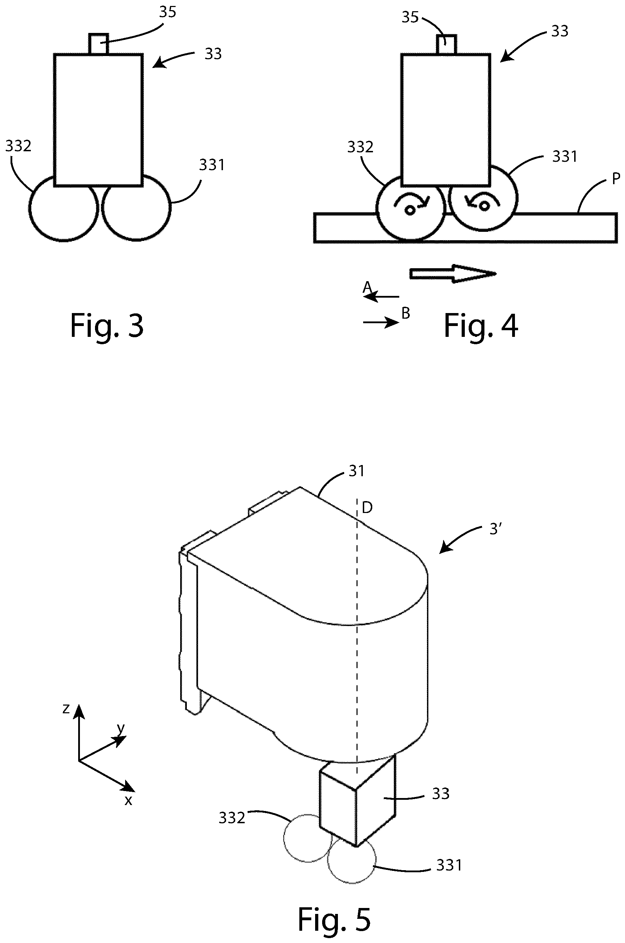

With reference to figure 5, in a second embodiment, said working group 3' comprises said support 31 and said aggregate.

Said support 31 and aggregate 33 are coupled to each other.

Said aggregate 33 can be rotatable with respect to said support 31 according to a first rotation axis D, to cut along different directions and/or can be removably coupled with respect to said support 31.

Said support 31 or aggregate 33 comprise motor means for rotating said first 331 and second 332 blades.

The operation of the working center C described above is as follows.

When it is necessary to make cuts or sections on pieces P made of wood, in particular panels, these are placed on said working plane 1.

On the basis of the machining to be carried out, said movable crosspiece 2 is moved to a predetermined position of said working plane 1 along the X-axis.

Said support 31 starts to translate along said movable crosspiece 2 along Y-axis.

In the forward cutting stroke of said support 31, i.e., in the direction of the positive Y indicated with A, said first blade 331 is arranged at a certain height along the Z-axis, rotates in a rotation direction, and traces an incision, also called incision line, on the piece P.

At the same time, said second blade 332, arranged following the first considering the advancement direction A along the Y-axis of said support 31, rotates in a rotation direction opposite to the rotation direction of said first blade 331 and is arranged at a greater height along the Z-axis with respect to the height of the first blade, or it is lowered with respect to said first blade 331, therefore said second blade 332 can carry out the through cut of the piece P along the incision line made by said first blade 331.

When said support 31 translates in the opposite direction, namely, in the direction of the negative Y indicated with B, the function of said first 331 and second blade 332 swaps.

Said working group 3 can also be moved to make oblique cuts on said piece P.

Even for the second embodiment, said working group 3' has an unchanged operation with respect to said working group 3.

As it is evident from the above description, the described working center C allows to carry out the cutting of wooden pieces in a working center also used for other processes.

Furthermore, the cutting of the pieces P takes place very quickly, as it is possible to carry out the cut in a single forward stroke of the machining group 3.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Working centre (C) for working workpieces (P) made of wood, ceramic, plastic, metal, glass, fiberglass, comprising
a working plane (1), for supporting said workpieces (P) to be worked, that extends along a first axis (X);
a movable cross member (2) moving along said working plane (1), according to said first axis (X);
a working group (3, 3') coupled to said movable cross member (2) slidably along a second axis (Y), orthogonal to said first axis (X), and movable along a third axis (Z), orthogonal to said first axis (X) and second axis (Y), so as to carry out cuts on said workpieces (P), during cutting strokes according to cutting lines (T),
said working centre (C) wherein said working group (3, 3') comprises a first rotary disc blade (331) and a second rotary disc blade (332), substantially arranged coplanar and configured so that, during the same cutting stroke of said working group (3, 3') along a cutting line (T), said first blade (331) is capable of carrying out an incision, partially interfering with said workpiece (P), and said second blade (332) is capable of carrying out a pass-through cut in said workpiece (P), along said incision, or vice versa, wherein
said working group (3), comprises a support (31) slidably coupled to said movable cross member (2) along said second axis (Y), and an aggregate (33), which in turn comprises said first (331) and second (332) blade, and
wherein said support (31) and aggregate (33) are coupled to each other.

2. Working centre (C) according to the preceding claim, **characterized**
**in that** said first blade (331) is capable of carrying out said incision on said workpiece (P) when said working group (3, 3') moves along a first direction (A) of said cutting line (T), and
**in that** said second blade (332) is capable of carrying out a pass-through cut along said incision of said workpiece (P) when said working group (3, 3') moves according to said first direction (A) of said cutting line (T).

3. Working centre (C) according to any one of the preceding claims, **characterized**
**in that** said second blade (332) is capable of carrying out said incision on said workpiece (P) when said working group (3, 3') moves according a second direction (B) of said cutting line (T), opposite to said first direction (A), and
**in that** said first blade (331) is capable of carrying out a pass-through cut in said workpiece (P) when said working group (3, 3') moves according to said second direction (B) of said cutting line (T), opposite to said first direction (A).

4. Working centre (C) according to any one of the preceding claims, **characterized in that** said first (331) and second (332) blade are capable of rotating according to rotation directions opposite with each other.

5. Working centre (C) according to any one of the preceding claims, **characterized in that** said first (331) and second (332) blade are relatively mobile to each other along said third axis (Z), approaching and moving away from the surface of said workpiece (P).

6. Working centre (C) according to any one of the preceding claims, **characterized in that** said first (331) and second (332) blade have the same diameter.

7. Working centre (C) according to any one of claims 1-5, **characterized in that** said first (331) and second (332) blade have a different diameter.

8. Working centre (C) according to the preceding claim, **characterized**
**in that** said working group (3) further comprises a head (32) rotatably coupled to said support (31) around a first rotation axis (D),
**in that** said working group (3) comprises an electrospindle (34) coupled to said head (32), and
**in that** said aggregate (33) and said electrospindle (34) comprise coupling interface means (35).

9. Working centre (C) according to the preceding claim, **characterized in that** said electrospindle (34) is coupled, in a removable way, to said head (32) and rotatably around a second rotation axis (F).

10. Working centre (C) according to any one of claims 1-7, **characterized**
**in that** said working group (3') comprises a support (31) slidably coupled to said movable cross member (2) along said second axis (Y), and an aggregate (33), which in turn comprises said first (331) and second (332) blade, and
**in that** said support (31) or said assembly (33) comprises motor means for the rotating actuation of said first (331) and second (332) blade.

11. Working centre (C) according to the preceding claim, **characterized in that** said aggregate (33) is rotatably coupled to said support (31) around a first rotation axis (D).

12. Working centre (C) according to the preceding claim, **characterized in that** said aggregate (33) is coupled to said support (31) in a removable way.

## Patentansprüche

1. Arbeitszentrum (C) zur Bearbeitung von Werkstücken (P) aus Holz, Keramik, Kunststoff, Metall, Glas, Glasfasern, bestehend aus eine Arbeitsebene (1) zum Tragen der zu bearbeitenden Werkstücke (P), die sich entlang einer ersten Achse (X) erstreckt;
einen beweglichen Querträger (2), der sich entlang der besagten Arbeitsebene (1) bewegt, gemäß der besagten ersten Achse (X);
eine Arbeitsgruppe (3, 3'), die mit dem besagten beweglichen Querträger (2) gleitend entlang einer zweiten Achse (Y), die orthogonal zu der besagten ersten Achse (X) ist, verbunden ist, und beweglich entlang einer dritten Achse (Z), orthogonal zu der ersten Achse (X) und der zweiten Achse (Y), um Schnitte an den Werkstücken (P) durchzuführen, während der Schnitthübe gemäß den Schnittlinien (T) für das besagte Arbeitszentrum (C), wobei die besagte Arbeitsgruppe (3, 3') aus einer ersten Drehscheibenklinge (331) und einem zweiten rotierenden Scheibenmesser (332) besteht, die im Wesentlichen koplanar angeordnet und so konfiguriert sind, dass während desselben Schneidhubs der besagten Arbeitsgruppe (3, 3') entlang einer Schnittlinie (T) die besagte erste Klinge (331) in der Lage ist, einen Einschnitt, der teilweise in das Werkstück (P) eingreift, und die besagte zweite Klinge (332) in der Lage ist, einen Durchgangsschnitt in dem besagten Werkstück (P), entlang des besagten Einschnitts durchzuführen, oder umgekehrt, wobei die besagte Arbeitsgruppe (3) einen Träger (31) umfasst, der gleitend entlang der besagten zweiten Achse (Y) mit dem besagten beweglichen Querträger (2) verbunden ist, und ein Aggregat (33), das seinerseits die besagte erste (331) und zweite (332) Klinge umfasst, und wobei der besagte Träger (31) und das Aggregat (33) sind Miteinander gekoppelt.

2. Arbeitszentrum (C) nach dem vorhergehenden Anspruch, **dadurch gekennzeichnet, dass** die erste Klinge (331) in der Lage ist, den Einschnitt an dem Werkstück (P) auszuführen, wenn sich die Arbeitsgruppe (3, 3') entlang einer ersten Richtung (A) der Schneidlinie (T) bewegt, und dass die zweite Klinge (332) in der Lage ist, einen Durchgangsschnitt entlang des Einschnitts des Werkstücks (P) auszuführen, wenn sich die Arbeitsgruppe (3, 3') entlang der ersten Richtung (A) der Schneidlinie bewegt (T) .

3. Arbeitszentrum (C) nach einem der vorhergehenden Ansprüche, **dadurch gekennzeichnet, dass** die zweite Klinge (332) in der Lage ist, den besagten Einschnitt an dem Werkstück (P) auszuführen, wenn sich die Arbeitsgruppe (3, 3') gemäß einer zweiten Richtung (B) der Schnittlinie (T) bewegt, die der ersten Richtung (A) entgegengesetzt ist, und dass die erste Klinge (331) in der Lage ist, einen Durchgangsschnitt in dem Werkstück (P) auszuführen, wenn sich die Arbeitsgruppe (3, 3') gemäß der zweiten Richtung (B) der Schneidelinie (T) entgegengesetzt zu der ersten Richtung (A) bewegt.

4. Arbeitszentrum (C) nach einem der vorhergehenden Ansprüche, **dadurch gekennzeichnet, dass** die besagte erste (331) und zweite (332) Klinge in der Lage sind, sich in entgegengesetzten Drehrichtungen zu drehen.

5. Arbeitszentrum (C) nach einem der vorhergehenden Ansprüche, **dadurch gekennzeichnet, dass** die besagte erste (331) und zweite (332) Klinge relativ zueinander entlang der besagten dritten Achse (Z) beweglich sind und sich der der Oberfläche des besagten Werkstücks (P) nähern und entfernen.

6. Arbeitszentrum (C) nach einem der vorhergehenden Ansprüche, **dadurch gekennzeichnet, dass** die besagte erste (331) und zweite (332) Klinge den gleichen Durchmesser aufweisen.

7. Arbeitszentrum (C) nach einem der Ansprüche 1-5, **dadurch gekennzeichnet, dass** die besagte erste (331) und zweite (332) Klinge einen unterschiedlichen Durchmesser aufweisen.

8. Arbeitszentrum (C) nach dem vorhergehenden Anspruch, **dadurch gekennzeichnet, dass** die besagte Arbeitsgruppe (3) ferner einen Kopf (32) umfasst, der mit dem besagten Träger (31) um eine erste Drehachse (D) drehbar verbunden ist, dass die besagte Arbeitsgruppe (3) eine Elektrospindel (34) umfasst, die mit dem besagten Kopf (32) gekoppelt ist, und dadurch, dass das besagte Aggregat (33) und die besagte Elektrospindel (34) Kopplungsschnittstellenmittel (35) umfassen.

9. Arbeitszentrum (C) nach dem vorhergehenden Anspruch, **dadurch gekennzeichnet, dass** die Elektrospindel (34) lösbar mit dem besagten Kopf (32) gekoppelt und um eine zweite Drehachse (F) drehbar ist.

10. Arbeitszentrum (C) nach einem der Ansprüche 1 **dadurch gekennzeichnet, dass** die besagte Arbeitsgruppe (3') einen Träger (31) umfasst, der beweglich entlang der besagten zweiten Achse (Y) mit dem besagten beweglichen Querträger (2) verbunden ist, und ein Aggregat (33), das seinerseits die besagte erste (331) und zweite (332) Klinge umfasst, und das der besagte Träger (31) oder die besagte Baugruppe (33) Motormittel für die Drehbetätigung der besagten ersten (331) und zweiten (332) Schaufel umfasst.

11. Arbeitszentrum (C) nach dem vorhergehenden Anspruch, **dadurch gekennzeichnet, dass** das besagte Aggregat (33) drehbar mit dem besagten Träger (31) um eine erste Drehachse (D) gekoppelt ist.

12. Arbeitszentrum (C) nach dem vorhergehenden Anspruch, **dadurch gekennzeichnet, dass** das besagte Aggregat (33) mit dem besagten Träger (31) beweglich gekoppelt ist.

## Revendications

1. Centre de travail (C) pour le travail de pièces (P) de bois, céramique, plastique, métal, verre, fibre de verre, comprenant un plan de travail (1), pour supporter lesdites pièces à travailler (P), qui s'étend le long d'un premier axe (X);
une traverse mobile (2) se déplaçant le long dudit plan de travail (1), selon ledit premier axe (X);
un groupe de travail (3, 3') couplé à ladite traverse mobile (2) de manière coulissante le long d'un deuxième axe (Y), orthogonal audit premier axe (X), et mobile le long d'un troisième axe (Z), orthogonal audit premier axe (X) et audit deuxième axe (Y), afin d'effectuer des coupes sur lesdites pièces (P), lors de courses de coupe selon des lignes de coupe (T), ledit centre de travail (C) dans lequel ledit groupe de travail (3, 3') comprend une première lame à disque rotatif (331) et une deuxième lame à disque rotatif (332), disposées sensiblement de manière coplanaire et configurées de manière à ce que, pendant la même course de coupe dudit groupe de travail (3, 3') le long d'une ligne de coupe (T), ladite première lame (331) soit capable d'effectuer une incision, en interférant partiellement avec ladite pièce (P), et que ladite deuxième lame (332) soit capable d'effectuer une coupe traversante dans ladite pièce (P), le long de ladite incision, ou vice versa, dans lequel ledit groupe de travail (3) comprend un support (31) couplé de manière coulissante à ladite traverse mobile (2) le long dudit second axe (Y), et un agrégat (33), qui comprend à son tour la première (331) et la deuxième (332) lame, et dans lequel ledit support (31) et l'agrégat (33) sont couplés l'un à l'autre.

2. Centre de travail (C) selon la revendication précédente, **caractérisé en ce que** ladite première lame (331) est apte à réaliser ladite incision sur ladite pièce (P) lorsque ledit groupe de travail (3, 3') se déplace selon une première direction (A) de ladite ligne de coupe (T), et **en ce que** ladite deuxième lame (332) est capable d'effectuer une coupe traversante le long de ladite incision de ladite pièce (P) lorsque ledit groupe de travail (3, 3') se déplace selon ladite première direction (A) de ladite ligne de coupe (T).

3. Centre de travail (C) selon l'une quelconque des revendications précédentes, **caractérisé en ce que** ladite deuxième lame (332) est apte à réaliser ladite incision sur ladite pièce (P) lorsque ledit groupe de travail (3, 3') se déplace selon une deuxième direction (B) de ladite ligne de coupe (T), opposée à ladite première direction (A), et **en ce que** ladite première lame (331) est apte à réaliser une coupe traversante dans ladite pièce (P) lorsque ledit groupe de travail (3, 3') se déplace selon ladite deuxième direction (B) de ladite ligne de coupe (T), opposée à ladite première direction (A).

4. Centre de travail (C) selon l'une quelconque des revendications précédentes, **caractérisé en ce que** la première (331) et la deuxième (332) lame peuvent tourner selon des sens de rotation opposés l'un à l'autre.

5. Centre de travail (C) selon l'une quelconque des revendications précédentes, **caractérisé en ce que** la première (331) et la deuxième (332) lame sont relativement mobiles l'une par rapport à l'autre le long du troisième axe (Z), s'approchant et s'éloignant de la surface de la pièce à usiner (P).

6. Centre de travail (C) selon l'une quelconque des revendications précédentes, **caractérisé en ce que** la première (331) et la deuxième (332) lame ont le même diamètre.

7. Centre de travail (C) selon l'une des revendications 1 à 5, **caractérisé en ce que** la première (331) et la deuxième (332) lame ont un diamètre différent.

8. Centre de travail (C) selon la revendication précédente, **caractérisé en ce que** ledit groupe de travail (3) comprend en outre une tête (32) couplée rotativement audit support (31) autour d'un premier axe de rotation (D), **en ce que** ledit groupe de travail (3) comprend une électrobroche (34) couplée à ladite tête (32), et **en ce que** ledit agrégat (33) et ladite électrobroche (34) comportent des moyens d'interface de couplage (35).

9. Centre de travail (C) selon la revendication précédente, **caractérisé en ce que** ladite électrobroche (34) est couplée, de manière amovible, à ladite tête (32) et rotative autour d'un second axe de rotation (F) .

10. Centre de travail (C) selon l'une quelconque des revendications 1 à 7 **caractérisé en ce que** ledit groupe de travail (3') comprend un support (31) couplé de manière coulissante à ladite traverse mobile (2) le long dudit second axe (Y), et un agrégat (33), qui comprend à son tour ladite première (331) et ladite deuxième (332) lame, et **en ce que** ledit support (31) ou ledit ensemble (33) comprend des moyens moteurs pour l'actionnement rotatif de ladite première (331) et deuxième (332) lame.

11. Centre de travail (C) selon la revendication précédente, **caractérisé en ce que** ledit agrégat (33) est couplé rotativement audit support (31) autour d'un premier axe de rotation (D).

12. Centre de travail (C) selon la revendication précédente, **caractérisé en ce que** ledit agrégat (33) est couplé audit support (31) de manière amovible.
